# FASCICULE DE BREVET EUROPEEN

(11) **EP 1 706 315 B1**
(45) Date de publication et mention de la délivrance du brevet: **30.04.2008**
(21) Numéro de dépôt: 05701562.0
(22) Date de dépôt: 20.01.2005
(51) Int. Cl.: B64C 9/24

(54) **VOLET MOBILE DE BORD D'ATTAQUE D'UNE AILE PRINCIPALE DE LA VOILURE D'UN AERONEF, ET AILE PRINCIPALE MUNIE D'UN TEL VOLET**
BEWEGLICHE VORDERKANTENKLAPPE FÜR EINEN HAUPTFLÜGEL DER TRAGFLÄCHEN EINES FLUGZEUGS UND MIT SOLCH EINER KLAPPE VERSEHENER HAUPTFLÜGEL
MOBILE LEADING EDGE FLAP FOR A MAIN WING OF THE AEROFOILS OF AN AIRCRAFT AND MAIN WING PROVIDED WITH SUCH A FLAP

(30) Priorité: 22.01.2004 BE 200400037
(43) Date de publication de la demande: 04.10.2006
(73) Titulaire: Sonaca S.A., 6041 Gosselies (BE)
(72) Inventeur: OVERBERGH, Christian, B-5590 Ciney (BE); HAUTECOEUR, Michel, B-1341 CEROUX-MOUSTY (BE)
(74) Mandataire: Poulin, Gérard
(86) Numéro de dépôt international: PCT/EP2005/050226
(87) Numéro de publication internationale: WO 2005/070762

(56) Documents cités:
- EP-A- 0 361 286
- US-A- 6 135 395
- PATENT ABSTRACTS OF JAPAN vol. 2003, no. 12, 5 décembre 2003 (2003-12-05) -& JP 2003 291892 A (JAPAN AIRCRAFT MFG CO LTD), 15 octobre 2003 (2003-10-15)

## Description

### DOMAINE TECHNIQUE

La présente invention se rapporte de façon générale à un volet mobile de bord d'attaque d'une aile principale de la voilure d'un aéronef, ce volet mobile comprenant notamment un revêtement aérodynamique présentant une zone frontale sensible aux impacts d'oiseaux. Ce type de volet mobile est conçu de façon à limiter les dommages qu'il pourrait subir suite à l'impact d'un oiseau en vol de croisière, au sol lors d'opérations de manoeuvre de l'aéronef, ou encore durant les phases de décollage et d'atterrissage.

Ce volet mobile est destiné à constituer tout ou partie du bord d'attaque de l'aile principale, bien que la solution visant à prévoir plusieurs volets mobiles sur une même aile principale soit préférentiellement retenue.

Ainsi, l'invention se rapporte également à une aile principale de voilure d'aéronef disposant d'au moins un tel volet mobile de bord d'attaque.

### ETAT DE LA TECHNIQUE ANTERIEURE

EP 0 361 286 est considéré comme l'art antérieur le plus proche.

Sur les aéronefs, chacune des deux ailes principales de la voilure est généralement équipée de volets mobiles hypersustentateurs, montés au bord d'attaque et au bord de fuite de l'aile.

De façon connue, les volets sont déployés pour les phases d'atterrissage et de décollage afin d'augmenter la portance à faible ou moyenne vitesse. Par ailleurs, en vol de croisière à grande vitesse, les volets mobiles sont rentrés pour limiter la résistance à l'avancement de l'aéronef. De plus, toujours de façon connue de l'homme du métier, le déplacement de chaque volet s'effectue à l'aide de mécanismes logés dans la partie avant d'une portion centrale principale de l'aile, ces mécanismes coopérant avec des nervures d'introduction d'efforts du volet espacées le long d'une direction longitudinale de bord d'attaque, et étant notamment dimensionnées pour maintenir le volet en position durant les différentes phases de vol, ainsi que pour assurer la transmission des efforts aérodynamiques.

Un tel volet mobile de bord d'attaque doit être conçu de manière à pouvoir résister à l'impact d'un oiseau survenant sur celui-ci en vol de croisière, au sol lors d'opérations de manoeuvre de l'aéronef, ou encore durant les phases de décollage et d'atterrissage. En d'autres termes, le volet doit être suffisamment résistant pour que la détérioration de ce dernier, engendrée lors de ce type d'impact, ne conduise qu'à des conséquences minimes et non-catastrophiques pour l'aile concernée.

A cet égard, il est indiqué qu'un impact d'oiseau sur le volet mobile de bord d'attaque est particulièrement néfaste et dangereux lorsque cet oiseau percute une partie du revêtement aérodynamique du volet dite « zone frontale sensible aux impacts d'oiseaux », cette zone sensible correspondant à la zone la plus critique de ce revêtement aérodynamique, en cas d'impact d'oiseau survenant sur ce dernier. Cette zone du revêtement aérodynamique, relativement peu inclinée par rapport à la verticale et s'étendant de façon limitée vers le haut et éventuellement vers le bas depuis une jonction entre une portion extrados et une portion intrados du revêtement aérodynamique, est en effet qualifiée de sensible dans la mesure où lorsqu'elle est impactée par un oiseau, le choc produit une énergie très importante principalement transmise au volet. Bien entendu, cette énergie serait capable d'engendrer une détérioration considérable du volet si celui-ci n'était pas conçu suffisamment résistant, et pourrait également provoquer des conséquences désastreuses sur l'aile de l'aéronef. A titre indicatif, il est noté qu'un choc d'oiseau survenant au-dessus et en dessous de la zone frontale mentionnée précédemment, produira une énergie plus faible, non-susceptible de générer des effets destructeurs. Effectivement, un oiseau entrant en contact avec l'une des portions extrados et intrados, en dehors de la zone frontale, aura sa trajectoire déviée par la portion concernée, et les efforts dynamiques liés au choc et transmis au volet mobile seront alors sans conséquence catastrophique.

Au vu de ce qui précède, il est donc évident que les contraintes susmentionnées conduisent inévitablement à concevoir des volets mobiles de conception complexe, dans le sens où l'espace utile pour amortir les chocs d'oiseaux est nécessairement limité, notamment par la présence d'un dispositif de protection contre le givre. De plus, il est noté que la structure prévue pour faire face à l'énergie d'un impact, qui est proportionnelle au carré de la vitesse de l'aéronef, doit être encore plus résistante lorsque le revêtement aérodynamique est réalisé dans un matériau peu ductile, tel qu'en matériau composite. En effet, bien que ce type de matériau soit souvent retenu pour des raisons évidentes de faible masse associée, il ne participe quasiment pas à l'absorption de l'énergie d'impact. En outre, il est également indiqué que lorsque le volet mobile est entièrement réalisé en matériau composite, sa fragilité au choc peut facilement conduire à sa destruction totale.

Par conséquent, dans les réalisations de l'art antérieur, les volets mobiles de bord d'attaque disposent donc de structures conçues pour limiter les effets destructeurs susceptibles d'être provoqués par un impact d'oiseau dans la zone frontale du revêtement aérodynamique, mais dont la définition requise conduit à une complexité structurelle qui engendre des inconvénients non-négligeables en termes de coût et de masse globale du volet.

### EXPOSÉ DE L'INVENTION

L'invention a donc pour but de proposer un volet mobile de bord d'attaque d'une aile principale de la voilure d'un aéronef comprenant notamment un revêtement aérodynamique présentant une zone frontale sensible aux impacts d'oiseaux, ce volet mobile remédiant au moins partiellement aux inconvénients mentionnés ci-dessus relatifs aux réalisations de l'art antérieur.

Le but de la présente invention est également de présenter une aile principale de la voilure d'un aéronef comprenant au moins un tel volet mobile de bord d'attaque.

Pour ce faire, l'invention a pour objet un volet mobile de bord d'attaque d'une aile principale de la voilure d'un aéronef, ce volet comprenant un revêtement aérodynamique présentant une zone frontale sensible aux impacts d'oiseaux, ainsi qu'un revêtement arrière solidaire d'une part d'un bord de fuite d'une portion extrados du revêtement aérodynamique et d'autre part d'un bord de fuite d'une portion intrados de ce revêtement, le volet comportant également une pluralité de nervures espacées le long d'une direction longitudinale de bord d'attaque. Selon l'invention, le volet comprend en outre, entre deux nervures directement consécutives, une unique paroi rigide déviatrice de trajectoire d'oiseau montée fixement d'une part sur le revêtement aérodynamique et d'autre part sur le revêtement arrière, cette paroi étant apte à dévier la trajectoire d'un oiseau suite à un impact de celui-ci contre la zone d'impact. Par ailleurs, en section prise selon un plan quelconque orthogonal à la direction longitudinale de bord d'attaque, l'unique paroi rigide déviatrice forme avec une corde géométrique du volet un angle d'une valeur inférieure à 45°.

Avantageusement et contrairement aux réalisations de l'art antérieur, l'effet recherché et atteint par la présente invention est de limiter l'énergie de choc créée lors de la collision entre un oiseau et le volet mobile de bord d'attaque puis transmise à ce même ensemble, en assurant une déviation appropriée de la trajectoire de cet oiseau. En d'autres termes, lors du choc d'un oiseau contre le volet mobile, la déviation opérée implique que ce n'est seulement qu'une partie de l'énergie cinétique associée à l'oiseau qui est transmise à ce volet mobile.

Par conséquent, le volet mobile de bord d'attaque est en mesure de présenter une conception simplifiée et allégée par rapport à celles rencontrées antérieurement, tout en étant capable de résister aux effets destructeurs pouvant être générés par l'impact d'un oiseau survenant sur la zone frontale. Ainsi, le volet selon l'invention permet d'éviter les conséquences catastrophiques qu'un tel choc serait susceptible de provoquer.

En effet, il est noté que dans un premier cas où le revêtement aérodynamique est réalisé dans un matériau peu ductile tel qu'en matériau composite, lorsqu'un oiseau impacte la zone frontale du revêtement aérodynamique du volet mobile, l'oiseau fissure puis perfore localement cette zone frontale. Dans ce premier cas, la détérioration observée est telle que le revêtement aérodynamique ne participe quasiment pas à l'absorption de l'énergie cinétique du choc. Cependant, immédiatement après la perforation de la zone frontale, l'oiseau entre en contact avec la paroi rigide qui dévie alors la trajectoire de cet oiseau. De cette façon, en raison de son inclinaison relativement faible par rapport à la corde géométrique, cette paroi déviatrice limite alors considérablement l'énergie de choc, et donc les efforts dynamiques transmis au volet mobile.

La valeur de 45° susmentionnée constitue effectivement une limite supérieure au-delà de laquelle une collision avec un oiseau génèrerait une énergie de choc trop importante pour que la paroi rigide puisse remplir sa fonction de déviation sans se rompre, bien entendu dans le cas où cette paroi disposerait d'une épaisseur non contraignante en termes de masse associée.

Il est donc à comprendre que l'agencement proposé par l'invention permet de réduire l'énergie de choc transmise à la structure de façon telle que la paroi rigide ne nécessite pas d'être surdimensionnée, ni même d'être associée à une structure annexe rigide encombrante et de masse importante.

A titre indicatif et comme cela sera expliqué de manière plus détaillée ci-après, lorsque le volet occupe une position intégralement rentrée par rapport à une portion centrale principale de l'aile, la corde géométrique de ce volet est à comprendre comme étant une ligne fictive confondue avec une corde géométrique de l'aile correspondant quant à elle de façon connue au segment de droite reliant le point le plus avant du volet intégralement rentré et le point le plus arrière de cette aile principale, dans une section de l'aile prise selon un plan quelconque orthogonal à la direction longitudinale de bord d'attaque.

Dans un second cas où le revêtement aérodynamique est réalisé dans un matériau plus ductile tel qu'un matériau métallique, par exemple l'aluminium, l'impact d'un oiseau sur la zone frontale conduit cette dernière à se déformer localement jusqu'à ce qu'elle entre en contact avec la paroi rigide déviatrice. Ainsi, la déformation du revêtement aérodynamique permet d'absorber une partie importante de l'énergie cinétique du choc. Ensuite, l'énergie résiduelle est dissipée de façon analogue à celle exposée ci-dessus pour le premier cas, à savoir par appui de l'oiseau contre la paroi rigide déviatrice inclinée, cet appui provoquant la déviation de la trajectoire de l'oiseau. Naturellement, dans ce second cas, l'appui de l'oiseau contre la paroi déviatrice est réalisé avec le revêtement aérodynamique interposé entre eux deux.

Les deux cas précédents ont été exposés en supposant que le choc de l'oiseau sur la zone frontale, rencontré en vol de croisière, au sol lors d'opérations de manoeuvre de l'aéronef ou encore durant les phases de décollage et d'atterrissage, est d'une intensité suffisamment importante pour provoquer les déformations susmentionnées. Néanmoins, pour des chocs d'intensité moindre ne générant pas de telles déformations du revêtement aérodynamique, par exemple lorsque l'aéronef évolue à vitesse faible, la transmission des efforts aérodynamiques ne cause bien entendu aucun problème, dans la mesure où la totalité de l'énergie cinétique du choc est absorbée par ce revêtement aérodynamique, sans que la paroi rigide déviatrice n'ait besoin d'être sollicitée mécaniquement.

En outre, il est noté que la fixation très judicieuse de l'unique paroi déviatrice à la fois sur le revêtement aérodynamique, et sur le revêtement arrière, permet avantageusement d'obtenir un caisson entre deux nervures directement consécutives, en procédant uniquement à l'adjonction de la paroi déviatrice précitée. Par conséquent, le volet se trouve considérablement renforcé par la présence de ce caisson formé également à l'aide d'une partie de la portion intrados du revêtement aérodynamique et du revêtement arrière, mais ne nécessite avantageusement pas de faire appel à des moyens coûteux en termes de masse additionnelle engendrée.

De façon préférée, en section prise selon un plan quelconque orthogonal à la direction longitudinale de bord d'attaque, la paroi rigide déviatrice forme avec la corde géométrique du volet un angle compris entre environ 25° et environ 35°. Des évaluations ont effectivement démontré que cette plage de valeur était optimale, dans le sens où elle permettait d'assurer une déviation de la trajectoire d'un oiseau sans que cela n'engendre une énergie de choc trop conséquente.

Préférentiellement, pour chaque groupe de deux nervures directement consécutives espacées le long de la direction longitudinale de bord d'attaque, une unique paroi rigide déviatrice de trajectoire d'oiseau est prévue entre ces deux nervures. De cette manière, c'est avantageusement la totalité du volet mobile de bord d'attaque qui est protégée contre les impacts d'oiseaux survenant dans la zone frontale sensible du revêtement aérodynamique.

De préférence, l'unique paroi rigide est montée fixement d'une part sur la portion intrados du revêtement aérodynamique et d'autre part sur une partie supérieure du revêtement arrière, de manière à former un caisson à l'aide d'une partie de la portion intrados du revêtement aérodynamique et du revêtement arrière, comme cela a été mentionné ci-dessus. Ainsi, l'unique paroi rigide déviatrice de trajectoire d'oiseau est agencée de manière à s'élever en allant vers l'arrière.

De plus, une section du caisson, prise selon un plan quelconque orthogonal à la direction longitudinale de bord d'attaque, dispose préférentiellement d'une forme sensiblement triangulaire.

A cet égard, une unique paroi rigide déviatrice de trajectoire d'oiseau est de préférence prévue pour chaque groupe de deux nervures directement consécutives espacées le long de la direction longitudinale de bord d'attaque, de manière à former une pluralité de caissons constituant ensemble une poutre s'étendant selon la direction longitudinale de bord d'attaque.

Avantageusement, cette poutre peut donc assurer l'essentiel de la résistance aux efforts produits lors du choc d'un oiseau survenant sur la zone frontale du revêtement aérodynamique, et conduisant à une déformation de cette dernière. D'autre part, après l'impact avec un oiseau, la poutre présente une résistance en flexion et en torsion notablement plus importante que celle observée avec les volets mobiles de l'art antérieur.

L'invention a également pour objet une aile principale de la voilure d'un aéronef comprenant au moins un volet mobile de bord d'attaque tel que celui qui vient d'être décrit.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un aéronef disposant d'ailes principales chacune susceptible d'être équipée d'au moins un volet mobile de bord d'attaque selon l'invention ;
- la figure 2 représente une vue en perspective partiellement éclatée d'un volet mobile de bord d'attaque d'une aile principale de la voilure d'aéronef, selon un mode de réalisation préféré de la présente invention ; et
- la figure 3 est une vue en coupe transversale prise selon le plan P de la figure 2, ce plan P étant orthogonal à la direction longitudinale de bord d'attaque, et choisi de façon quelconque entre deux nervures directement consécutives.

### EXPOSÉ DÉTAILLÉ DE MODES DE RÉALISATION PRÉFÉRÉS

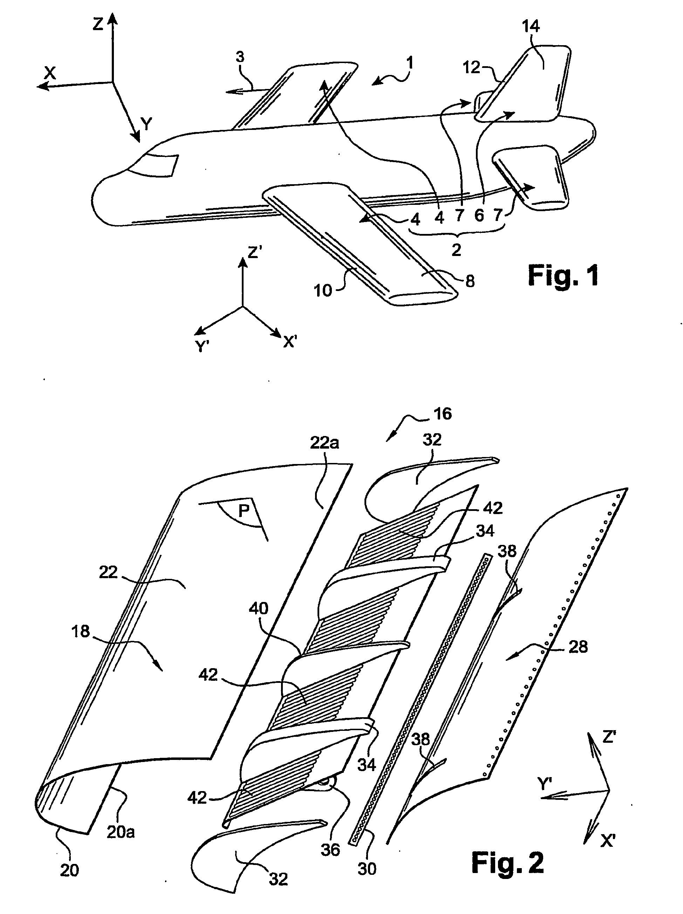

En référence à la figure 1, on voit un aéronef 1 disposant d'une voilure 2 constituée d'une pluralité d'éléments de voilure, parmi lesquels on compte une dérive verticale 6 et deux empennages horizontaux 7 situés à l'arrière de cet aéronef, ainsi que deux ailes principales 4 chacune susceptible d'être équipée d'au moins un ensemble de bord d'attaque selon l'invention, comme cela va être exposé de manière détaillée ci-dessous.

Dans toute la description qui va suivre, par convention, on appelle X la direction longitudinale de l'aéronef 1, Y la direction orientée transversalement par rapport à l'aéronef, et Z la direction verticale, ces trois directions étant orthogonales entre-elles.

D'autre part, les termes « avant » et « arrière » sont à considérer par rapport à une direction d'avancement de l'aéronef rencontrée suite à la poussée exercée par les moteurs de l'aéronef, cette direction étant représentée schématiquement par la flèche 3.

En ce qui concerne les ailes principales 4, celles-ci comprennent chacune une portion centrale principale 8 constituant quasiment l'intégralité de l'aile, et étant située en arrière d'un bord d'attaque 10, qui peut quant à lui intégrer un ou plusieurs volets mobile (non représentés sur cette figure 1). Ici encore, dans toute la description qui va suivre, par convention, on appelle X' la direction longitudinale de bord d'attaque, Y' la direction orientée transversalement par rapport au bord d'attaque 10 de l'aile 4, et Z' la direction verticale, ces trois directions étant orthogonales entre-elles. Dans l'exemple montré sur la figure 1 donné à titre illustratif et où l'aéronef dispose d'ailes principales à flèche, les directions X et Y' d'une part et les directions X' et Y d'autre part ne sont pas parallèles entre elles, contrairement aux directions Z et Z'. Néanmoins, dans un tel cas, les plans XY et X'Y' restent sensiblement parallèles.

Ainsi, c'est effectivement le bord d'attaque 10 de chacune des deux ailes principales 4 qui peut être réalisé à l'aide d'au moins un volet mobile de bord d'attaque objet de la présente invention, et dont un mode de réalisation préféré va à présent être décrit.

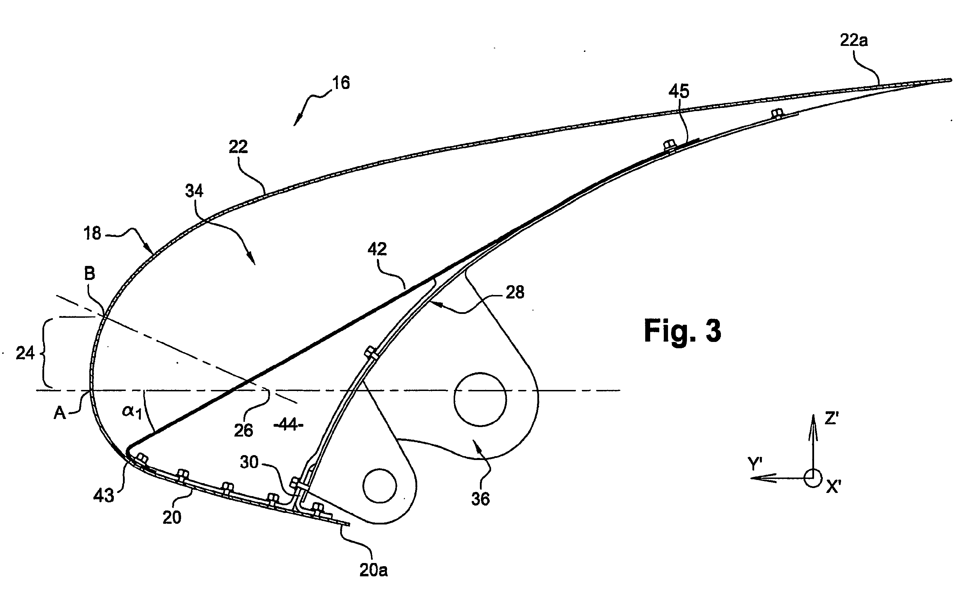

En référence conjointement aux figures 2 et 3, on voit un volet mobile de bord d'attaque 16 s'étendant par exemple sur sensiblement toute la longueur de l'aile 4 concernée, bien entendu selon la direction longitudinale de bord d'attaque X'. Pour des raisons évidentes de clarté des figures 2 et 3, la portion centrale principale 8 de l'aile 4 n'a pas été représentée, mais elle peut naturellement être réalisée selon toute configuration connue de l'homme du métier.

Le volet mobile de bord d'attaque 16 comporte un revêtement aérodynamique 18, éventuellement réalisé à l'aide de plusieurs éléments solidarisés et s'étendant selon la direction X', et définissant une portion intrados 20 ainsi qu'une portion extrados 22. De plus, comme cela est indiqué sur la figure 3, le revêtement 18 présente une zone frontale sensible aux impacts d'oiseaux 24, cette zone 24 étant telle que décrite dans l'art antérieur. Plus précisément mais toujours à titre indicatif, elle s'étant entre un point A correspondant au point le plus avant du revêtement 18 en phase de croisière lorsque le volet 16 est intégralement rentré (tel que représenté sur cette figure 3), et un point B correspondant au point le plus avant du revêtement 18 en phase d'atterrissage lorsque le volet 16 est intégralement déployé.

En outre, il est noté que le point A se situe sur une corde géométrique 26 du volet 16 qui est confondue avec la corde géométrique de l'aile principale 4, tandis que le point B se situe sur la portion extrados 22.

Il est noté que la « corde géométrique 26 » de l'aile 4, et donc du volet 16, est à comprendre comme étant le segment de droite fictif reliant le point le plus avant et le point le plus arrière de la section de l'aile 4 lorsque le volet est intégralement rentré comme montré sur la figure 3, cette section étant prise selon un plan quelconque orthogonal à la direction X'. En d'autres termes, la corde 26 est le segment de droite reliant un point (le point A) établissant la jonction avant entre un intrados et un extrados de l'aile et un point (non représenté) établissant la jonction arrière entre ces mêmes intrados et extrados, toujours dans une section quelconque de l'aile 4 prise selon un plan Y'Z'.

Un revêtement arrière 28 du volet 16 ferme une partie arrière de celui-ci. Effectivement, ce revêtement arrière 28 est solidaire d'une part d'un bord de fuite 20a de la portion intrados 20 du revêtement 18, et d'autre part d'un bord de fuite 22a de la portion extrados 22 de ce même revêtement 18. Il est précisé que le revêtement arrière 28, s'étendant selon la direction X', dispose de façon connue d'une courbure vers l'avant lui permettant d'épouser une partie de géométrie complémentaire appartenant à la portion centrale principale de l'aile 4, et de glisser sur celle-ci. De plus, un longeron 30 de section en forme de L s'étendant selon la direction X' peut être interposé entre le bord de fuite 20a de la portion intrados 20 et une partie inférieure du revêtement 28, afin de renforcer la liaison mécanique entre ces deux éléments.

Les revêtements 18 et 28, formant un espace fermé longitudinalement le long de la direction X', sont également solidarisés à deux nervures d'extrémité 32 fermant de part et d'autre l'espace mentionné ci-dessus, à l'aide de moyens conventionnels et connus de l'homme du métier. Par ailleurs, les revêtements 18 et 28 sont aussi solidarisés à des nervures d'introduction d'efforts 34. Ces nervures d'introduction d'efforts 34 disposent dans une partie inférieure de moyens d'attaches 36 permettant d'assurer la liaison entre le volet 16 et les mécanismes de déplacement de ce dernier. Ainsi, des orifices 38 sont pratiqués sur le revêtement arrière 28, afin que les moyens d'attaches 36 puissent traverser celui-ci.

D'autre part, les revêtements 18 et 28 peuvent également être solidarisés à une ou plusieurs nervures intermédiaires 40, celles-ci étant en effet susceptibles d'être interposées entre deux nervures quelconques 32,34 directement consécutives, dans le but d'accroître la rigidité du volet 16.

Au vu de ce qui précède, on voit donc que le volet mobile de bord d'attaque 16 selon le premier mode de réalisation préféré de la présente invention comporte une pluralité de nervures 32, 34 et 40, communément appelées nervures transversales du volet mobile. Elles sont espacées le long de la direction X', et de préférence toutes orientées verticalement, selon la direction Y' du bord d'attaque 10.

La particularité de l'invention réside dans le fait qu'entre deux nervures quelconques 32, 34 et 40 directement consécutives, le volet mobile 16 comprend une unique paroi rigide déviatrice de trajectoire d'oiseau 42 montée fixement entre ces deux mêmes nervures, et éventuellement également montée fixement à ces deux dernières. Comme indiqué précédemment, la paroi rigide déviatrice 42 sert à dévier la trajectoire d'un oiseau suite à un impact de celui-ci contre la zone d'impact 24, lorsque cet impact conduit à une déformation du revêtement 18 ainsi qu'à un appui de l'oiseau contre la paroi rigide 42.

Comme on peut l'apercevoir le mieux sur la figure 3, la paroi rigide 42 dispose d'un bord inférieur avant 43 légèrement recourbé vers l'intérieur du volet, et monté fixement sur la portion intrados 20 du revêtement 18, par exemple par rivetage ou boulonnage. Cette paroi 42 sensiblement plane et préférentiellement parallèle à la direction X' s'étend vers l'arrière en s'élevant jusqu'à un bord supérieur arrière 45, et vient de préférence tangenter une partie supérieure du revêtement arrière 28. Ainsi, le bord supérieur arrière 45 est donc monté fixement sur le revêtement arrière 28, par exemple par rivetage ou boulonnage, à proximité du bord de fuite 22a de la portion extrados 22.

A cet égard, dans toute section prise selon un plan Y'Z' entre deux nervures quelconques directement consécutives 32,34,40, un angle α1 formé entre la paroi rigide 42 et la corde géométrique 26 est inférieur à 45°, et de préférence de l'ordre de 30° comme cela est représenté sur la figure 3.

Avec un tel agencement, la paroi déviatrice 42 forme avec la portion intrados 20 et le revêtement 28 un caisson 44, qui en section prise selon un plan quelconque orthogonal à la direction X', dispose de préférence d'une forme sensiblement triangulaire. De plus, il est bien entendu évident que lorsqu'une paroi déviatrice 42 est prévue pour chaque groupe de deux nervures 32, 34 et 40 directement consécutives du volet 16, les caissons 44 disposés successivement constituent alors ensemble une poutre unique (non référencée) s'étendant selon la direction X', sur toute la longueur du volet 16. Ainsi, cette poutre de section triangulaire confère d'excellentes caractéristiques de résistance en flexion et torsion, et est donc réalisée à l'aide d'une partie de la portion intrados 20, du revêtement 28, ainsi qu'à l'aide des parois rigides déviatrices 42.

La totalité des éléments constitutifs du volet mobile de bord d'attaque 16, exceptées les parois rigides déviatrices 42, sont par exemple réalisés à l'aide d'un matériau peu ductile, tel qu'un matériau composite. Dans un tel cas, les parois rigides 42 se succédant le long de la direction X' peuvent alors être réalisées dans un matériau métallique tel que l'aluminium ou ses alliages. Les choix de matériaux qui viennent d'être indiqués permettent alors avantageusement d'offrir un compromis tout à fait satisfaisant entre la résistance mécanique et la masse du volet mobile 16.

Bien entendu, diverses modifications peuvent être apportées par l'homme du métier au volet mobile de bord d'attaque 16 qui vient d'être décrit, uniquement à titre d'exemple non limitatif.

## Revendications

1. Volet mobile de bord d'attaque (16) d'une aile principale (4) de la voilure d'un aéronef (1), ledit volet comprenant un revêtement aérodynamique (18) présentant une zone frontale sensible aux impacts d'oiseaux (24), ainsi qu'un revêtement arrière (28) solidaire d'une part d'un bord de fuite (22a) d'une portion extrados (22) du revêtement aérodynamique (18) et d'autre part d'un bord de fuite (20a) d'une portion intrados (20) de ce revêtement (18), ledit volet comportant également une pluralité de nervures (32,34,40) espacées le long d'une direction longitudinale de bord d'attaque (X'), et en outre, entre deux nervures directement consécutives, une unique paroi rigide déviatrice de trajectoire d'oiseau (42) montée fixement d'une part sur le revêtement aérodynamique (18) et d'autre part sur le revêtement arrière (28), cette paroi (42) étant apte à dévier la trajectoire d'un oiseau suite à un impact de celui-ci contre ladite zone d'impact (24), et en ce qu'en section prise selon un plan quelconque orthogonal à la direction longitudinale de bord d'attaque (X'), ladite paroi rigide déviatrice (42) forme avec une corde géométrique (26) du volet un angle (α1) d'une valeur inférieure à 45°.

2. Volet mobile de bord d'attaque (16) selon la revendication 1, **caractérisé en ce qu'**en section prise selon un plan quelconque orthogonal à la direction longitudinale de bord d'attaque (X'), ladite paroi rigide déviatrice (42) forme avec la corde géométrique (26) un angle (α1) compris entre environ 25° et environ 35°.

3. Volet mobile de bord d'attaque (16) selon la revendication 1 ou la revendication 2, **caractérisé en ce que** pour chaque groupe de deux nervures directement consécutives (32,34,40) espacées le long de la direction longitudinale de bord d'attaque (X'), une unique paroi rigide déviatrice de trajectoire d'oiseau (42) est prévue entre lesdites deux nervures.

4. Volet mobile de bord d'attaque (16) selon l'une quelconque des revendications précédentes, **caractérisé en ce que** ladite unique paroi rigide (42) est montée fixement d'une part sur ladite portion intrados (20) du revêtement aérodynamique (18) et d'autre part sur une partie supérieure du revêtement arrière (28), afin de former un caisson (44) à l'aide d'une partie de la portion intrados (20) du revêtement aérodynamique (18) et du revêtement arrière (28), et de façon à ce que ladite unique paroi rigide déviatrice de trajectoire d'oiseau (42) soit agencée de manière à s'élever en allant vers l'arrière.

5. Volet mobile de bord d'attaque (16) selon la revendication 4, **caractérisé en ce qu'**une section dudit caisson (44), prise selon un plan quelconque orthogonal à la direction longitudinale de bord d'attaque (X'), dispose d'une forme sensiblement triangulaire.

6. Volet mobile de bord d'attaque (16) selon la revendication 4 ou la revendication 5, **caractérisé en ce qu'**une unique paroi rigide déviatrice de trajectoire d'oiseau (42) est prévue pour chaque groupe de deux nervures directement consécutives (32,34,40) espacées le long de la direction longitudinale de bord d'attaque (X'), de manière à former une pluralité de caissons (44) constituant ensemble une poutre s'étendant selon la direction longitudinale de bord d'attaque (X').

7. Volet mobile de bord d'attaque (16) selon l'une quelconque des revendications précédentes, **caractérisé en ce que** le revêtement aérodynamique (18) est réalisé à l'aide d'un matériau peu ductile.

8. Aile principale (4) de la voilure d'un aéronef (1), **caractérisée en ce qu'**elle comprend au moins un volet mobile de bord d'attaque (16) selon l'une quelconque des revendications précédentes.

## Claims

1. Leading edge mobile flap (16) for a main wing (4) of the wing system of an aircraft (1), said flap including an aerodynamic skin (18) that has a bird impact-sensitive frontal area (24), and a rear skin (28) integral on the one hand with a trailing edge (22a) of an upper surface portion (22) of the aerodynamic skin (18) and on the other hand with a trailing edge (20a) of a lower surface portion (20) of this skin (18), said flap also comprising a plurality of ribs (32, 34, 40) spaced out along a leading edge longitudinal direction (X'), and additionally includes, between two directly consecutive ribs, a single rigid bird trajectory-deflecting wall (42) anchored on the one hand to the aerodynamic skin (18) and on the other hand to the rear skin (28), this wall (42) being capable of deflecting the trajectory of a bird subsequent to it impacting against said impact area (24), and in that in a cross-section taken along any plane orthogonal to the leading edge longitudinal direction (X'), said rigid deflecting wall (42) forms with a geometric chord (26) of the flap an angle (α1) with a value of less than 45°.

2. Leading edge mobile flap (16) according to claim 1, **characterized in that** in a cross-section taken along any plane orthogonal to the leading edge longitudinal direction (X'), said rigid deflecting wall (42) forms with the geometric chord (26) an angle (α1) of between about 25° and about 35°.

3. Leading edge mobile flap (16) according to claim 1 or claim 2, **characterised in that** for each group of two directly consecutive ribs (32,34,40) spaced our along the leading edge longitudinal direction (X'), a single rigid bird trajectory-deflecting wall (42) is provided between said two ribs.

4. Leading edge mobile flap (16) according to any one of the previous claims, **characterised in that** said single rigid wall (42) is anchored on the one hand to said lower surface portion (20) of the aerodynamic skin (18) and on the other hand to an upper part of the rear skin (28), so as to form a box-type structure (44) using a part of the lower surface portion (20) of the aerodynamic skin (18) and of the rear skin (28), and in such a way that said single rigid bird trajectory-deflecting wall (42) is arranged so as to rise in a rearward direction.

5. Leading edge mobile flap (16) according to claim 4, **characterised in that** a cross-section of the said box-type structure (44), taken along any plane orthogonal to the leading edge longitudinal direction (X'), is substantially triangular in shape.

6. Leading edge mobile flap (16) according to claim 4 or claim 5, **characterised in that** a single rigid bird trajectory-deflecting wall (42) is provided for each group of two directly consecutive ribs (32, 34, 40) spaced out along the leading edge longitudinal direction (X'), so as to form a plurality of box-type structures (44) together constituting a beam extending along the leading edge longitudinal direction (X').

7. Leading edge mobile flap (16) according to any one of the previous claims, **characterised in that** the aerodynamic skin (18) is made using a material that is not very ductile.

8. Main wing (4) of the wing system of an aircraft (1), **characterised in that** it includes at least one leading edge mobile flap (16) according to any one of the previous claims.

## Patentansprüche

1. Bewegliche Vorderkantenklappe (16) für einen Hauptflügel (4) der Tragfläche eines Luftfahrzeugs (1), wobei die Klappe eine aerodynamische Verkleidung (18) umfasst, die eine frontale Zone aufweist, welche anfällig ist für den Aufprall von Vögeln (24), sowie eine hintere Verkleidung (28), die verbunden ist einerseits mit einer Hinterkante (22a) eines Oberseitenabschnitts (22) der aerodynamischen Verkleidung (18) und andererseits mit einer Hinterkante (20a) eines Unterseitenabschnitts (20) dieser Verkleidung (18), wobei die Klappe ferner eine Mehrzahl von Rippen (32, 34, 40) umfasst, die entlang einer Längsrichtung der Vorderkante (X') beabstandet sind, sowie ferner, zwischen zwei direkt aufeinander folgenden Rippen, eine einzelne starre Wand zur Umlenkung der Bahn eines Vogels (42), die einerseits an der aerodynamischen Verkleidung (18) und andererseits an der hinteren Verkleidung (28) fest montiert ist, wobei diese Wand (42) dazu ausgelegt ist, die Bahn eines Vogels in Anschluss an einen Aufprall desselben gegen die Aufprallzone (24) umzulenken, und dass in einem Querschnitt entlang einer beliebigen Ebene orthogonal zur Längsrichtung der Vorderkante (X') die starre Umlenkwand (42) mit einer geometrischen Sehne (26) der Klappe einen Winkel (α1) mit einem Wert kleiner als 45° bildet.

2. Bewegliche Vorderkantenklappe (16) nach Anspruch 1, **dadurch gekennzeichnet, dass** in einem Querschnitt entlang einer beliebigen Ebene orthogonal zur Längsrichtung der Vorderkante (X') die starre Umlenkwand mit der geometrischen Sehne (26) einen Winkel (α1) bildet, der zwischen ungefähr 25° und ungefähr 35° enthalten ist.

3. Bewegliche Vorderkantenklappe (16) nach Anspruch 1 oder Anspruch 2, **dadurch gekennzeichnet, dass** für jede Gruppe von zwei direkt aufeinander folgenden Rippen (32, 34, 40), die entlang der Längsrichtung der Vorderkante (X') beabstandet sind, eine einzelne starre Wand zur Umlenkung der Bahn eines Vogels (42) zwischen den zwei Rippen vorgesehen ist.

4. Bewegliche Vorderkantenklappe (16) nach einem der vorhergehenden Ansprüche, **dadurch gekennzeichnet, dass** die einzelne starre Wand (42) einerseits an dem Unterseitenabschnitt (20) der aerodynamischen Verkleidung (18) und andererseits an einem oberen Teil der hinteren Verkleidung (28) fest montiert ist, um mit Hilfe eines Teils des Unterseitenabschnitts (20) der aerodynamischen Verkleidung (18) und der hinteren Verkleidung (28) einen Kasten (44) zu bilden, und derart, dass die einzelne starre Wand zur Umlenkung der Bahn eines Vogels (42) so gestaltet ist, dass sie nach hinten verlaufend ansteigt.

5. Bewegliche Vorderkantenklappe (16) nach Anspruch 4, **dadurch gekennzeichnet, dass** ein Querschnitt des Kastens (44) entlang einer beliebigen Ebene orthogonal zur Längsrichtung der Vorderkante (X') eine im wesentlichen dreieckige Form aufweist.

6. Bewegliche Vorderkantenklappe (16) nach Anspruch 4 oder nach Anspruch 5, **dadurch gekennzeichnet, dass** eine einzelne starre Wand zur Umlenkung der Bahn eines Vogels (42) vorgesehen ist für jede Gruppe von zwei direkt aufeinander folgenden Rippen (32, 34, 40), die entlang der Längsrichtung der Vorderkante (X') beabstandet sind, derart, dass eine Mehrzahl von Kästen (44) gebildet wird, die gemeinsam einen Träger bilden, der sich entlang der Längsrichtung der Vorderkante (X') erstreckt.

7. Bewegliche Vorderkantenklappe (16) nach einem der vorhergeheden Ansprüche, **dadurch gekennzeichnet, dass** die aerodynamische Verkleidung (18) mit Hilfe eines wenig duktilen Materials realisiert ist.

8. Hauptflügel (4) der Tragfläche eines Luftfahrzeugs (1), **dadurch gekennzeichnet, dass** er wenigstens eine bewegliche Vorderkantenklappe (16) nach einem der vorhergehenden Ansprüche umfasst.
